# FASCICULE DE BREVET EUROPEEN

(11) **EP 3 700 459 B1**
(45) Date de publication et mention de la délivrance du brevet: **07.06.2023**
(21) Numéro de dépôt: 18803540.6
(22) Date de dépôt: 23.10.2018
(51) Int. Cl.: A61C 8/00

(54) **ENSEMBLE D'IMPLANTATION DENTAIRE ENDO-OSSEUX**
ENOSSALE ZAHNIMPLANTATIONSANORDNUNG
ENDOSSEOUS DENTAL IMPLANTATION ASSEMBLY

(30) Priorité: 23.10.2017 FR 1771114
(43) Date de publication de la demande: 02.09.2020
(73) Titulaire: Glad Medical, 13300 Salon de Provence (FR)
(72) Inventeur: BADIH, Laurence, 13300 Salon de Provence (FR)
(74) Mandataire: Barbot, Willy
(86) Numéro de dépôt international: PCT/EP2018/000484
(87) Numéro de publication internationale: WO 2019/081059

(56) Documents cités:
- WO-A1-02/074181
- WO-A1-02/074181
- US-A1- 2003 232 308
- US-A1- 2003 232 308
- US-A1- 2011 171 601
- US-A1- 2011 171 601

## Description

### Domaine de l'invention

La présente invention se rapporte au domaine des implants dentaires endo-osseux et, plus précisément, à la stabilisation de ces implants.

### Arrière-plan de l'invention

Classiquement, les implants endo-osseux prennent la forme la forme d'un pied d'ancrage adapté pour une implantation dans un os de la mâchoire d'un patient, lequel pied d'ancrage correspond le plus souvent à une vis d'ancrage.

Un exemple de tels implants est donné dans la demande de brevet US 2003/232308 dans lequel un pied d'ancrage (base) destiné à être positionné dans un logement de forme complémentaire préparé dans l'os de la mâchoire du patient présente également une collerette (plateforme) s'étendant à partir de la base et avec laquelle elle forme donc une seule et même pièce. Maintenant, ce pied d'ancrage coopère le plus souvent avec un pilier externe qui est destiné à être fixé dans le pied d'ancrage et qui va être couplé à une connexion prothétique permettant de fixer une couronne pour remplacer l'élément dentaire manquant.

Dans le cas où l'as de la mâchoire n'est pas particulièrement dense et/ou n'est pas en quantité importante, le pied d'ancrage est mis « en nourrice » pendant une période de cicatrisation. Cela signifie que le pied d'ancrage est mis en place dans l'os et que les gencives sont refermées par-dessus. Dans ce cas, aucune force ne s'applique et il n'y a pas de risques de mobilisation du pied d'ancrage pendant la phase de cicatrisation. Ainsi, une période de six mois pour un implant maxillaire et de trois mois pour un implant mandibulaire est nécessaire pour permettre la cicatrisation. Pendant cette période, toute mobilisation ou surcharge sur l'os entraine un rejet du pied d'ancrage. Après cette période de cicatrisation, les gencives sont ouvertes et le pilier prothétique est mis en place ainsi que la dent.

Pour ne pas être contraint à une telle attente, la demande internationale WO 2011/010061 décrit un dispositif de stabilisation additionnel pour implant endo-osseux qui permet d'améliorer considérablement sa stabilité dans le temps.

Maintenant, si ce dispositif de stabilisation additionnel a donné satisfaction dans de nombreuses situations, il présente néanmoins différents désavantages.

Ainsi, la présence du dispositif de stabilisation additionnel, s'il est en dehors de la gencive, se révèle disgracieux. Pour pallier à cet aspect disgracieux, les tentatives d'intégration de ce même dispositif dans l'os ont échoué en donnant parfois lieux à des infections induisant tant la destruction de l'os, que la résorption de la gencive. A la suite de telles complications, la seule alternative consiste en retirer le dispositif en question.

En outre, ce même dispositif s'est parfois avéré difficile à monter, essentiellement pour bien le centrer par rapport au pied d'ancrage. De même, il a pu s'avérer difficile à retirer.

US 2003/232308 A1 décrit un ensemble d'implantation dentaire.

Il en résulte qu'il existe toujours un besoin de nouveaux dispositifs d'implantation endo-osseux qui bénéficient d'une bonne stabilité, qui n'altère pas ou pas trop l'esthétique qui soit simple à monter et, au besoin, simple à démonter.

### Objet et résumé de l'invention

L'invention est telle que définie dans les revendications annexées.

La présente invention a donc pour but principal de proposer un ensemble d'implantation présentant tout à la fois une très bonne stabilité dans le temps sans aspect disgracieux et sans risque de suites défavorables du fait de potentielles infections.

A noter en outre que l'ensemble selon l'invention se révèle tout à la fois plus simple à poser et également plus simple à extraire.

L'invention propose pour cela un ensemble d'implantation dentaire comprenant, d'une part, un implant dentaire endo-osseux comprenant au moins un pied d'ancrage adapté à une installation dans un os de mâchoire d'un patient de manière endo-osseuse et des moyens anti-rotationnels et, d'autre part, un dispositif de stabilisation prenant la forme d'une plateforme substantiellement rigide comprenant (i) au moins deux prolongations longilignes latérales d'ancrage flexibles, de part et d'autre de la plateforme centrale, de manière à pouvoir être placées à cheval sur l'os de la mâchoire, plaquées de part et d'autre de celui-ci, chaque prolongation comprenant au moins un orifice pour positionner au moins une vis de fixation, (ii) une connexion prothétique, sur sa face opposée à l'os de la mâchoire, destinée à accueillir une couronne et (iii) un pilier externe destiné à être fixé dans le pied d'ancrage, sur sa face reposant sur l'os de la mâchoire, lequel pilier externe comprend des moyens anti-rotationnels permettant, par leur association aux moyens anti-rotationnels de l'implant dentaire endo-osseux, d'inhiber les mouvements relatifs du pilier externe par rapport au pied d'ancrage une fois le pilier externe placé dans le pied d'ancrage,

Caractérisé en ce que la plateforme substantiellement rigide forme un composant unique avec le pilier externe et/ou avec la connexion prothétique.

Avec un tel ensemble, le praticien n'éprouve pas de difficultés à poser le dispositif de stabilisation, la plateforme étant solidaire du pilier externe qui agit alors comme un moyen de centrage de cette dernière par rapport au pied d'ancrage.

De surcroît, il a été mis en évidence qu'un tel dispositif peut être implanté dans l'os de la mâchoire sans infection ultérieure. De la sorte, et après l'ostéo-intégration, le dispositif selon l'invention est invisible et l'altère aucunement l'esthétique de la bouche du patient.

Il est aussi envisagé que l'ensemble d'implantation dentaire puisse servir pour une stabilisation intermédiaire pendant une phase dite de mise en nourrice durant laquelle la couronne n'est pas installée. Dans ce cas, la connexion prothétique est protégée durant le processus de reminéralisation et de reconstitution osseuse. A l'issue de ce processus, le dispositif de stabilisation peut ensuite, au choix et en fonction des besoins, être laissé à demeure pour renforcer la stabilité de l'implant de manière permanente ou être retiré et remplacé par un pilier externe (non associé à une quelconque plateforme) porteur d'une connexion prothétique. Ensuite, au moment de l'installation de la couronne, le dispositif de stabilisation peut être laissé à demeure ou être ôté, et dans ce cas remplacé par un pilier externe non associé à une plateforme, avant de placer la couronne. Dans ce cas, le dispositif de stabilisation, en ce qu'il comprend une connexion prothétique proéminente, peut être facilement retiré ce qui n'était pas connu du dispositif de stabilisation additionnel de l'art antérieur (le retrait de ce dernier entraînant potentiellement une destruction de l'os du fait de sa difficulté d'extraction).

On remarque ici que le dispositif de stabilisation selon l'invention peut, au besoin, être très aisément installé et désinstallé de la bouche du patient après dépose de la couronne.

Selon une caractéristique préférentielle de l'invention, le pied d'ancrage prend la forme d'une vis apte à être vissée dans un logement complémentaire préparé et conformé dans l'os maxillaire. L'os de la mâchoire est alors est alors taraudé de sorte à obtenir un filetage qui permettra la fixation du pied d'ancrage. La vis du pied d'ancrage pourra être de forme cylindrique ou conique.

Le matériau du pied d'ancrage est avantageusement compatible avec le matériau biologique de l'os afin de faciliter son ostéo-intégration dans la mâchoire (os maxillaire et mandibulaire). Typiquement, le pied d'ancrage est réalisé en titane ou en alliage de titane.

Le pilier externe, la connexion prothétique et la plateforme du dispositif de stabilisation peuvent, deux-à-deux, être fait de matière, être soudés ou être sertis.

La réalisation de pièce par faite de matière ou le sertissage sont bien connues de l'homme du métier. De même, le soudage peut être effectué par des techniques bien connues de l'homme du métier. Dans le cas où le dispositif de stabilisation est fait de titane ou d'un alliage de titane, le soudage de ses différents composants peut alors notamment être effectué au laser, par friction ou par bombardement électronique. De préférence, ce soudage est effectué par laser.

Selon une autre caractéristique préférentielle de l'invention, le dispositif de stabilisation comprend, sur sa face opposée à l'os et directement sous la connexion prothétique, une partie trans-muqueuse.

Idéalement, la hauteur de cette partie trans-muqueuse est comprise entre 0,5 et 4 mm et son diamètre est compris entre 2 et 4 mm.

De préférence toujours, la partie trans-muqueuse comprend un étranglement dans le sens de la largeur et peut, éventuellement également comprendre un feston. Cet étranglement présente un profil arrondi, sensiblement parabolique et dénué de tout angle potentiellement vulnérant, et forme une gorge en creux. Cette gorge préserve avantageusement un espace biologique important apte à accueillir les tissus mous de la muqueuse gingivale et permettre ainsi à la gencive de se reformer autour.

Selon une caractéristique préférentielle de l'invention, la plateforme substantiellement rigide forme alors un composant unique avec le pilier externe et la partie trans-muqueuse.

La connexion prothétique est apte, au choix, à accueillir une couronne trans-vissée ou une couronne scellée.

Selon une autre caractéristique préférentielle de l'invention, l'ensemble de l'invention comprend en outre : (i) une vis dont la tête correspond à la connexion prothétique et qui présente, à son extrémité distale, un filetage externe, (ii) un pilier externe et, si elle est présente, une partie trans-muqueuse présentant une cavité interne permettant le passage de ladite vis mais pas de sa tête et (iii) un pied d'ancrage comprenant une cavité interne dans laquelle est ménagé un taraudage qui peut coopérer avec le filetage de la vis pour permettre l'assemblage de l'ensemble selon l'invention par vissage du filetage de la vis dans le taraudage de la cavité interne du pied d'ancrage.

Dans ce mode de réalisation, cette vis permet donc l'assemblage de l'ensemble selon l'invention par trans-vissage.

Avantageusement, la tête de vis et le pilier externe ou, si elle est présente, la partie trans-muqueuse présentent des moyens de centrage. Typiquement, ces moyens de centrage sont tels que la tête de vis et le pilier externe ou, si elle est présente, la partie trans-muqueuse comprennent des portions femelle et mâle complémentaires.

De préférence, ces formes femelle et mâle complémentaires sont des formes coniques. Dès lors, outre le centrage, ces formes permettent de, outre le centrage, inhiber les mouvements relatifs et d'assurer l'étanchéité entre la vis et le pilier externe ou, si elle est présente, la partie trans-muqueuse.

De préférence, la vis et le pilier externe ou, si elle est présente, la partie trans-muqueuse présentent des moyens de centrage complémentaires lesquels sont compris dans la longueur de la vis et dans la cavité interne du pilier externe ou, si elle est présente, de la partie trans-muqueuse.

Selon une caractéristique préférentielle de l'invention, un taraudage est ménagé au sein de la cavité interne du pilier externe. Ce taraudage peut coopérer avec un filetage externe présent sur un extracteur décrit par la suite, de sorte de permettre le désassemblage du dispositif de stabilisation du pied d'ancrage.

Selon une autre caractéristique préférentielle de l'invention, les prolongations longilignes latérales d'ancrage flexibles associées à la plateforme centrale peuvent être au nombre de deux, de trois, de quatre, de cinq, voire même de six ou plus encore. Chacune de ces branches est pourvue d'au moins un orifice pour positionner une vis de fixation. Maintenant et de préférence, au moins une des prolongations latérales est formée par un bras en Y, chaque branche du Y étant pourvue d'un orifice pour positionner une vis de fixation. Cette caractéristique est particulièrement importante pour le maintien en position du dispositif de stabilisation additionnel. En effet, la forme en Y d'au moins une des prolongations latérales du dispositif lui permet de suivre les lignes de contraintes engendrées par les mouvements rotationnels et de torsion liés à la mastication du patient. Aussi, une telle forme des prolongations latérales permet de limiter fortement les sollicitations nuisibles pour l'intégrité du dispositif de stabilisation. De fortes sollicitations sur les bras minces constituant les prolongations longilignes du dispositif selon l'invention peuvent en effet mener à la rupture des prolongations latérales.

Très avantageusement, pour assurer une bonne stabilisation de l'implant, les deux orifices des branches d'un même Y étant séparés d'au moins la largeur de l'implant endo-osseux.

Selon une autre caractéristique possible de l'invention, au moins une des prolongations latérales est formée par un bras en T, chaque branche du T étant pourvue d'un orifice pour positionner une vis de fixation. Cette configuration du dispositif, moins favorable du point de vue de la répartition des contraintes sur le dispositif de stabilisation, est néanmoins envisageable selon l'invention. De fait, les contraintes générées par la mastication du patient pourront en l'occurrence engendrer une rupture d'un des bras du T plus aisément que dans le cas où une prolongation latérale en Y est utilisée.

Ici aussi, avantageusement, les deux orifices des branches d'un même Y ou d'un même T étant séparés d'au moins la largeur de l'implant endo-osseux.

Selon une caractéristique particulière de l'invention, une des prolongations latérales est plus longue que l'autre et est alors destinée à être fixée du coté vestibulaire de la mâchoire. Cette caractéristique permet de différencier le coté vestibulaire et le coté palatin et autorise une meilleure adaptation du dispositif de stabilisation additionnel dans la bouche du patient.

Avantageusement, l'épaisseur de la plateforme substantiellement rigide est comprise entre 0,2 et 1 mm et, de préférence, entre 0,4 et 0,8 mm.

Selon une caractéristique avantageuse, la longueur de la plateforme substantiellement rigide est comprise entre 6 et 25 mm et, de préférence, entre 7 et 16 mm.

Plus précisément, selon des caractéristiques avantageuses de l'invention, les longueurs des prolongations latérales sont comprises entre 3 et 6 mm en palatin et entre 4 et 10 mm en vestibulaire.

Selon une caractéristique possible de l'invention, le dispositif de stabilisation et l'implant endo-osseux présentant des moyens anti-rotationnels tels que le pied d'ancrage et le pilier comprennent des portions femelle et mâle complémentaires de formes polygonales régulières.

Un des avantages de ce mode de réalisation est d'assurer, par un appui mécanique en butée de deux surfaces l'une sur l'autre, une inhibition des mouvements relatifs entre le pied d'ancrage et le pilier externe.

Selon une autre caractéristique possible de l'invention, le dispositif de stabilisation et l'implant dentaire endo-osseux présentent des moyens anti-rotationnels par friction. Dans ce cas, la forme du pilier externe et du pied d'ancrage sont telles qu'elles leur permettent d'avoir deux surfaces de friction anti-rotationnelles en contact l'une de l'autre.

Selon une mise en oeuvre, les moyens anti-rotationnels par friction sont tels que le pied d'ancrage et le pilier comprennent des portions femelle et mâle complémentaires de

Dans le cas d'une connectique de type cône morse, celle-ci peut être positionnée, soit en infra-crestal, soit en juxta-crestal. Pour se faire, on joue sur la hauteur du cône morse qui est alors comprise entre 1 et 4 mm, de préférence entre 1,5 et 3,5 mm. Pour ce qui est de l'angle de la connectique, il est typiquement compris entre 2 et 10°.

Un deuxième objet de l'invention concerne un dispositif de stabilisation prenant la forme d'une plateforme substantiellement rigide tel que décrit précédemment.

Un troisième objet de l'invention concerne une prothèse de reconstruction dentaire comprenant un ensemble d'implantation dentaire selon l'invention et au moins une couronne apte à être assemblée au dit ensemble, via la connexion prothétique.

Un quatrième objet de l'invention concerne un kit d'implantation dentaire comprenant un ensemble d'implantation dentaire selon l'invention, au moins quatre vis ostéo-intégrables pour ajuster et fixer l'ensemble d'implantation dentaire sur un os de mâchoire maxillaire ou mandibulaire.

Selon un mode de réalisation préféré, le kit selon l'invention est caractérisé en ce qu'un taraudage est ménagé au sein de la cavité interne du pilier externe et en ce qu'il comprend en outre un extracteur (i) prenant la forme d'une vis dont la tête comprend un moyen de préhension et/ou un moyen d'accouplement avec un outil de vissage/dévissage (ex. compatible avec un outil de typa Allen), (ii) un filetage externe pouvant coopérer avec le taraudage ménagé dans la cavité interne du pilier externe et (iii) dont l'extrémité distale ne comprend aucun moyen permettant l'assemblage de l'extracteur avec le pied d'ancrage, de préférence, cette extrémité distale de l'extracteur vient en appui sur une surface de la cavité interne du pied d'ancrage.

Ainsi, l'extrémité distale de l'extracteur ne comprend aucun filetage de sorte de ne pas coopérer avec le taraudage de la cavité interne pratiquée au fond de l'orifice du pied d'ancrage.

Le vissage de l'extracteur permet la coopération de son filetage externe avec le taraudage ménagé au sein de la cavité interne du pilier externe tout en maintenant l'appui de son extrémité distale sur une surface interne du pied d'ancrage et ceci de sorte de permettre l'extraction du pilier externe et, plus généralement du dispositif de stabilisation, du pied d'ancrage de l'ensemble d'implantation dentaire selon l'invention.

L'extrémité distale de l'extracteur présente avantageusement une forme empêchant toute coopération avec le taraudage ménagé au sein de la cavité interne du pied d'ancrage. Typiquement, l'extrémité distale de l'extracteur présente une forme arrondie ou conique.

D'autres caractéristiques et avantages de la présente invention ressortiront de la description faite ci-dessous en référence aux dessins annexés qui en illustrent un exemple de réalisation dépourvu de tout caractère limitatif :
- la figure 1 montre une vue en coupe d'un mode de réalisation d'un ensemble d'implantation dentaire selon l'invention en cours d'implantation dans l'os de la mâchoire d'un sujet.
- la figure 2 montre une autre vue du mode de réalisation d'un ensemble d'implantation dentaire tel que décrit à la figure 1 en cours d'implanté dans l'os de la mâchoire d'un sujet.
- la figure 3 montre une vue du dessus vues d'une plateforme substantiellement rigide mis en oeuvre dans l'ensemble d'implantation dentaire décrit à la figure 1 qui est associé à une connexion prothétique.
- la figure 4 montre différentes vues d'une vis dont une des extrémités porte la connexion prothétique et qui permet l'assemblage par trans-vissage de l'ensemble d'implantation dentaire décrit à la figure 1.

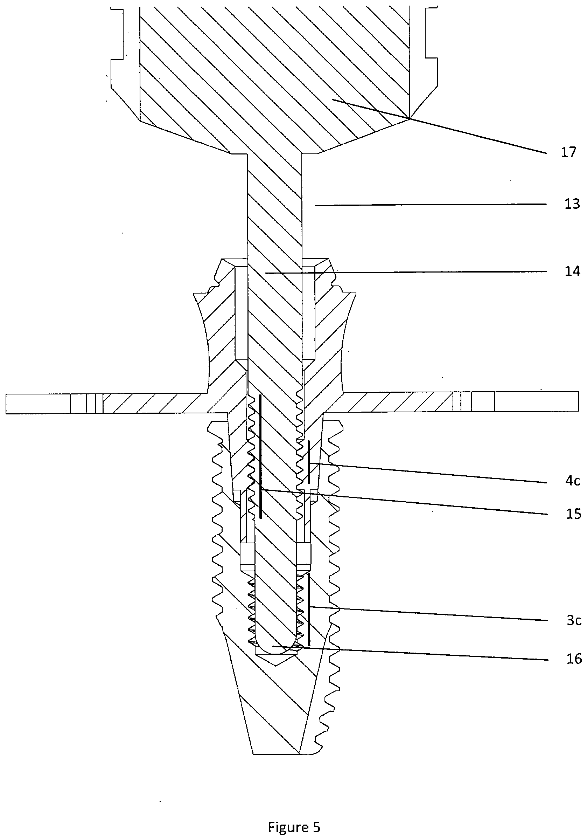

- la figure 5 montre une vue en coupe de la mise en oeuvre d'un extracteur pour le désassemblage d'un ensemble d'implantation tel que décrit à la figure 1.

### Description détaillée d'un mode de réalisation

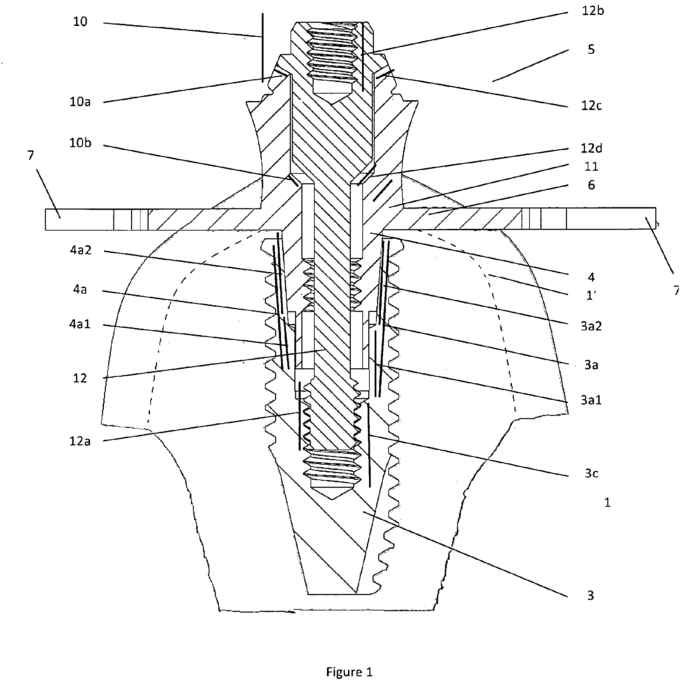

La figure 1 représente schématiquement un os de mâchoire 1 recouvert de tissu gingival (2non figuré). Cet os 1 a été perforé de manière à ce que soit introduit un pied d'ancrage 3 d'un implant dentaire endo-osseux. Une cavité 1' a en outre été réalisée dans ce même os de manière à pouvoir accueillir un dispositif de stabilisation 5 comprenant un pilier externe 4 surmontée d'une plateforme centrale 6 substantiellement rigide, elle-même surmontée d'une partie trans-muqueuse 11. Le pilier 4 comprend une base 4a qui constitue une portion male complémentaire d'une portion femelle 3a qui est un orifice 3a pratiqué dans le pied d'ancrage 3. Ces portions complémentaires constituent des moyens anti-rotationnels et permettent de réaliser un lien mécanique par introduction de la base 4a dans l'orifice 3a et ainsi d'inhiber les mouvements du pilier externe 4 par rapport au pied d'ancrage 3. Sur la figure 1, on voit que les moyens anti-rotationnels sont basés sur l'utilisation de portions mâle et femelle formant, sur la partie haute, un cône morse 3a2,4a2 respectivement, surmontant une base de section hexagonale 3a1,4a1.

La présence d'un cône morse est importante en ce qu'elle permet d'assurer l'étanchéité et ainsi d'éviter la colonisation de bactérie depuis l'implant vers l'os.

Sur la figure 1, est aussi représentée la plateforme substantiellement rigide 6 appartenant au dispositif de stabilisation 5 selon l'invention. Ce dispositif de stabilisation 5 comprend une plateforme centrale 6 substantiellement rigide associée en son centre au pilier externe 4. On comprend que l'installation du dispositif de stabilisation 5 formé par la plateforme substantiellement rigide 6 s'en trouve fortement facilité par le pilier externe 4 qui lui est associé et qui agit comme un moyen de centrage par rapport au pilier d'ancrage 3 vissé dans l'os de la mâchoire 1. Pour être immobilisé par rapport à l'os de la mâchoire 1, le dispositif de stabilisation 5 comprend deux prolongations latérales d'ancrage flexibles 7.

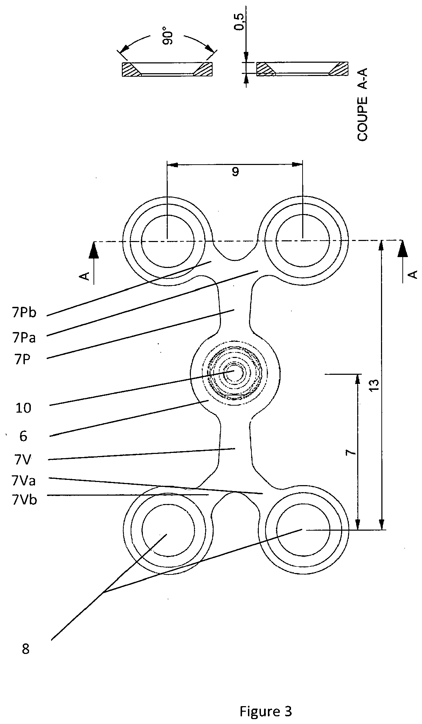

Le pilier 4 et la partie trans-muqueuse 11 comprennent une cavité centrale les traversant sur toute leur longueur et s'alignant avec une autre cavité interne 3c pratiquée au fond de l'orifice 3a dans le pied d'ancrage 3 lorsque le pilier 4 est engagé dans le pied d'ancrage 3. Ces cavités sont destinées à recevoir une vis de blocage 12 fixant le pilier 4 au pied d'ancrage 3 et, par la même, l'assemblage de l'ensemble prothétique selon l'invention par trans-vissage. A cette fin, un taraudage est ménagé dans la cavité interne 3c, lequel peut coopérer avec le filetage complémentaire de l'extrémité 12a de la vis 12. La tête de cette vis 12 correspond à la connexion prothétique 10 destinée à accueillir la couronne. Dans le mode de réalisation présenté, la couronne sera trans-vissée et, à cette fin, la tête comprend, outre la connexion prothétique 10, une cavité 12b dans laquelle est ménagée un taraudage pouvant coopérer avec le - filetage complémentaire d'une vis destinée à lui associer la couronne. Dans le mode de réalisation présenté, la vis et la partie trans-muqueuse comprennent deux moyens anti-rotationnels supplémentaires (10a et 12c, 10b et 12d) prenant tous les deux la forme de portions mâle et femelle coniques. A noter que la vis 12 est représentée seule en figure 3.

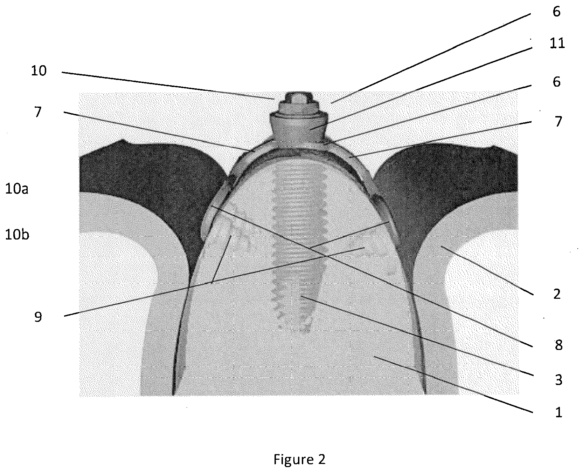

La figure 2 représente une autre vue du mode de réalisation décrit à la figure 1 et on voit notamment la position de l'os de mâchoire 1 par rapport au tissu gingival 2 qui le recouvre. Comme sur la précédente figure 1, on observe le pied d'ancrage 3 de l'implant dentaire endo-osseux qui perfore l'os 1. Sur ce pied d'ancrage est connecté un pilier externe (non apparent sur cette figure) qui est surmontée d'une plateforme centrale 6 substantiellement rigide, elle-même surmontée d'une partie trans-muqueuse 11. Sur cette figure, on voit bien la plateforme substantiellement rigide 6 appartenant au dispositif de stabilisation 5 selon l'invention. Ce dispositif de stabilisation 5 comprend une plateforme centrale 6 substantiellement rigide associée en son centre au pilier externe (non visible). Pour être immobilisé par rapport à l'os de la mâchoire 1, le dispositif de stabilisation 5 comprend deux prolongations latérales d'ancrage flexibles 7 en forme de Y ; chacune des branches du Y présentant un orifice 8 permettant de placer une vis ostéo intégrable 9. Avantageusement, l'écartement des orifices 8 pour recevoir les vis latérales 9 permettant de maintenir le dispositif de stabilisation 5 sera fonction de la taille de l'implant endo-osseux. On remarque ainsi qu'avantageusement, les deux vis de fixation 9 sont écartées d'au moins la largeur de l'implant endo-osseux. Cette fixation à l'os de la mâchoire d'un élément par ailleurs partie prenante de l'implant, permet de renforcer très efficacement la fondation de l'implant endo-osseux dans l'os de la mâchoire 1.

Ainsi que cela est illustré sur la figure 2, les prolongations latérales 7 d'ancrage sont telles qu'elles sont destinées à être placées sous le tissu gingival 2, qui est préalablement incisé et soulevé, à cheval et au sein de l'os de la mâchoire 1, où une cavité est préalablement réalisée par l'implantologue.

La figure 3 montre un premier mode de réalisation, dans lequel la plateforme centrale 6 est associé en son centre à la connexion prothétique 10 et présente deux prolongations latérales sous forme de bras 7P et 7V qui prennent chacun la forme d'un Y et comprennent donc en extrémités deux branches, respectivement 7Va, 7Vb et 7Pa, 7Pb. On remarque, sur cette figure, que le bras 7V est plus long que le bras 7P. Cela répond à un besoin anatomique. En effet, il est souhaitable que la prolongation latérale 7V destinée à être fixée du coté vestibulaire soit plus longue que la prolongation latérale 7P destinée à être fixée du coté palatin.

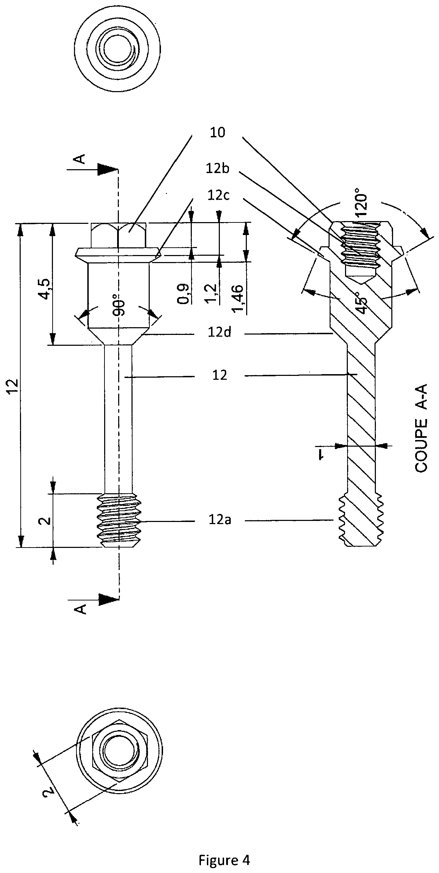

La figure 4 représente la vis 12 permettant l'assemblage de l'ensemble prothétique selon l'invention par trans-vissage. Comme mentionné précédemment, la tête de cette vis 12 correspond à la connexion prothétique 10 destinée à accueillir la couronne et l'extrémité 12a distale de la vis 12 reçoit un filetage complémentaire du taraudage ménagée dans la cavité interne 3c du pied d'ancrage. Au sein de la tête de vis se trouve également une cavité 12b dans laquelle est ménagé un taraudage pouvant coopérer avec le filetage complémentaire d'une vis destinée à lui associer la couronne par trans-vissage.

Enfin, la vis 12 comprend deux surfaces inclinées 12c et 12d qui constituent les portions mâles complémentaires de portions femelles de moyens anti-rotationnels présents dans la cavité interne de la partie trans-muqueuse.

La figure 4 représente un ensemble d'implantation dentaire dans lequel la vis 12 d'assemblage par trans-vissage a été retirée. A sa place se trouve positionné un extracteur 13 en vue du désassemblage de l'ensemble d'implantation dentaire selon l'invention. Cet extracteur 13 prend la forme d'une vis dont la tête 14 comprend un moyen de préhension, dont l'extrémité distale ne comprend aucun filetage de sorte de ne pas coopérer avec le taraudage de la cavité interne 3c pratiquée au fond de l'orifice 3a du pied d'ancrage 3, et qui comprend en outre un filetage externe 15 pouvant coopérer avec le taraudage ménagé 4c dans la cavité interne du pilier externe 4.

## Revendications

1. Un ensemble d'implantation dentaire comprenant :
1) un implant dentaire endo-osseux comprenant au moins un pied d'ancrage (3) adapté à une installation dans un os de mâchoire (1) d'un patient de manière endo-osseuse et des moyens anti-rotationnels ;
2) un dispositif de stabilisation (5) prenant la forme d'une plateforme substantiellement rigide (6) comprenant :
• au moins deux prolongations longilignes latérales d'ancrage flexibles (7), de part et d'autre de la plateforme centrale (6), de manière à pouvoir être placées à cheval sur l'os de la mâchoire (1), plaquées de part et d'autre de celui-ci, chaque prolongation comprenant au moins un orifice (8) pour positionner au moins une vis de fixation (9) ;
• une connexion prothétique (10), sur sa face opposée à l'os de la mâchoire (1), destinée à accueillir une couronne,
• un pilier externe (4) destiné à être fixé dans le pied d'ancrage (3), sur sa face reposant sur l'os de la mâchoire (1), lequel pilier externe (4) comprend des moyens anti-rotationnels permettant, par leur association aux moyens anti-rotationnels de l'implant dentaire endo-osseux, d'inhiber les mouvements relatifs du pilier externe (4) par rapport au pied d'ancrage (3) une fois le pilier externe (4) placé dans le pied d'ancrage (3) et
• une partie transmuqueuse (11) sur la face opposée à l'os (1) et directement sous la connexion prothétique (10), la plateforme substantiellement rigide (6) formant un composant unique avec le pilier externe (4), la connexion prothétique (10) et la partie transmuqueuse (11),
3) une vis (12) permettant son assemblage, dont la tête correspond à la connexion prothétique (10), laquelle vis (12) traverse de part en part le pilier externe (4) et la partie transmuqueuse (11), et dont l'extrémité distale est filetée,
4) le pilier externe (4) et la partie transmuqueuse (11) évidés de sorte de permettre le passage de ladite vis (12), et
5) le pied d'ancrage (3) comprenant une cavité interne (3c) dans laquelle est ménagée un taraudage qui peut coopérer avec le filetage complémentaire (12a) de ladite vis (12) pour permettre l'assemblage de l'ensemble d'implantation dentaire par trans-vissage,
***caractérisé en ce qu'un*** taraudage est ménagé au sein de la cavité interne du pilier externe (4).

2. L'ensemble d'implantation dentaire selon la revendication 1, **caractérisé en ce que** les moyens anti-rotationnels du pied d'ancrage (3) et du pilier externe (4) comprennent des portions de formes polygonales régulières et/ou coniques complémentaires.

3. Un dispositif de stabilisation (5) prenant la forme d'une plateforme substantiellement rigide (6) comprenant :
• au moins deux prolongations longilignes latérales d'ancrage flexibles (7), de part et d'autre de la plateforme centrale (6), de manière à pouvoir être placées à cheval sur l'os de la mâchoire (1), plaquées de part et d'autre de celui-ci, chaque prolongation comprenant au moins un orifice (8) pour positionner au moins une vis de fixation (9) ;
• une connexion prothétique (10), sur sa face opposée à l'os de la mâchoire (1), destinée à accueillir une couronne,
• un pilier externe (4) destiné à être fixé dans le pied d'ancrage (3), sur sa face reposant sur l'os de la mâchoire (1), lequel pilier externe (4) comprend des moyens anti-rotationnels permettant, par leur association aux moyens anti-rotationnels de l'implant dentaire endo-osseux, d'inhiber les mouvements relatifs du pilier externe (4) par rapport au pied d'ancrage (3) une fois le pilier externe (4) placé dans le pied d'ancrage (3) et
• une partie transmuqueuse (11) sur la face opposée à l'os (1) et directement sous la connexion prothétique (10), la plateforme (6) substantiellement rigide formant un composant unique avec le pilier externe (4) et/ou la connexion prothétique (10), ***caractérisé en ce qu'un*** taraudage est ménagé au sein de la cavité interne du pilier externe (4).

4. Une prothèse de reconstruction dentaire comprenant un ensemble d'implantation dentaire tel que défini à l'une quelconque des revendications 1 à 2 et au moins une couronne apte à être assemblée au dit ensemble, via la connexion prothétique (10).

5. Un kit d'implantation dentaire comprenant un ensemble d'implantation dentaire tel que défini à l'une quelconque des revendications 1 à 2 et au moins quatre vis ostéo-intégrables (9) pour ajuster et fixer l'ensemble d'implantation dentaire sur un os de mâchoire (1) maxillaire ou mandibulaire.

6. Le kit selon la revendication 5, **caractérisé en ce qu'**il comprend en outre un extracteur (13) :
• prenant la forme d'une vis dont la tête (14) comprend un moyen de préhension et/ou un moyen d'accouplement avec un outil de vissage/dévissage,
• comprenant un filetage externe pouvant coopérer avec le taraudage ménagé dans la cavité interne (4c) du pilier externe (4) et,
• dont l'extrémité distale ne comprend aucun moyen permettant l'assemblage de l'extracteur avec le pied d'ancrage.

## Patentansprüche

1. Dentalimplantatanordnung, umfassend:
1) ein enossales Dentalimplantat, mindestens eine Verankerungswurzel (3), die für das enossale Einsetzen in einen Kieferknochen (1) eines Patienten ausgebildet ist, und Drehungen verhindernde Mittel umfassend,
2) eine Stabilisierungsvorrichtung (5) in Form einer im Wesentlichen starren Plattform (6), umfassend:
• mindestens zwei seitliche, längliche, flexible Verankerungsfortsätze (7) beiderseits der zentralen Plattform (6), derart, dass sie dem Kieferknochen (1) aufsitzend angeordnet werden können, diesem beiderseits anliegend, wobei jeder Fortsatz mindestens eine Öffnung (8) zum Einsetzen mindestens einer Befestigungsschraube (9) aufweist,
• eine Prothesenverbindung (10) auf ihrer vom Kieferknochen (1) abgewandten Seite, dazu bestimmt, eine Krone aufzunehmen,
• einen äußeren Pfeiler (4), dazu bestimmt, in der Verankerungswurzel (3) auf ihrer auf dem Kieferknochen (1) ruhenden Seite befestigt zu werden, wobei dieser äußere Pfeiler (4) Drehungen verhindernde Mittel umfasst, die in Verbindung mit den Drehungen verhindernden Mitteln des enossalen Implantats Bewegungen des äußeren Pfeilers (4) relativ zur Verankerungswurzel (3) zu verhindern erlauben, sobald der äußere Pfeiler (4) in die Verankerungswurzel (3) eingesetzt ist, und
• einen transmukösen Teil (11) auf der vom Kieferknochen (1) abgewandten Seite unmittelbar unter der Prothesenverbindung (10),
wobei die im Wesentlichen starre Plattform (6) mit dem äußeren Pfeiler (4), der Prothesenverbindung (10) und dem transmukösen Teil (11) ein einziges Stück bildet,
3) eine ihr Zusammensetzen ermöglichende Schraube (12), deren Kopf der Prothesenverbindung (10) entspricht, wobei diese Schraube (12) den äußeren Pfeiler (4) und den transmukösen Teil (11) durchquert, und deren distales Ende gewindet ist,
4) wobei der äußere Pfeiler (4) und der transmuköse Teil (11) durchbohrt sind, derart, dass das Durchtreten der Schraube (12) ermöglicht wird, und
5) die Verankerungswurzel (3) einen inneren Hohlraum (3c) umfasst, in dem ein Innengewinde ausgebildet ist, das mit dem komplementären Außengewinde (12a) der genannten Schraube (12) zusammenwirken kann, um das Zusammensetzen der Dentalimplantatanordnung durch Hindurchschrauben zu erlauben,
***dadurch gekennzeichnet, dass*** ein Innengewinde im Inneren des inneren Hohlraums des äußeren Pfeilers (4) ausgebildet ist.

2. Dentalimplantatanordnung nach Patentanspruch 1, **dadurch gekennzeichnet, dass** die Drehungen verhindernden Mittel der Verankerungswurzel (3) und des äußeren Pfeilers (4) Bereiche in Form komplementärer regelmäßiger Polygone und/oder Kegel aufweisen.

3. Stabilisierungsvorrichtung (5) in Form einer im Wesentlichen starren Plattform (6), umfassend:
• mindestens zwei seitliche, längliche, flexible Verankerungsfortsätze (7) beiderseits der zentralen Plattform (6), derart, dass sie dem Kieferknochen (1) aufsitzend angeordnet werden können, diesem beiderseits anliegend, wobei jeder Fortsatz mindestens eine Öffnung (8) zum Einsetzen mindestens einer Befestigungsschraube (9) aufweist,
• eine Prothesenverbindung (10) auf ihrer vom Kieferknochen (1) abgewandten Seite, dazu bestimmt, eine Krone aufzunehmen,
• einen äußeren Pfeiler (4), dazu bestimmt, in der Verankerungswurzel (3) auf ihrer auf dem Kieferknochen (1) ruhenden Seite befestigt zu werden, wobei dieser äußere Pfeiler (4) Drehungen verhindernde Mittel umfasst, die in Verbindung mit den Drehungen verhindernden Mitteln des enossalen Implantats Bewegungen des äußeren Pfeilers (4) relativ zur Verankerungswurzel (3) zu verhindern erlauben, sobald der äußere Pfeiler (4) in die Verankerungswurzel (3) eingesetzt ist, und
• einen transmukösen Teil (11) auf der vom Kieferknochen (1) abgewandten Seite unmittelbar unter der Prothesenverbindung (10),
wobei die im Wesentlichen starre Plattform (6) mit dem äußeren Pfeiler (4) und/oder der Prothesenverbindung (10) ein einziges Stück bildet,
***dadurch gekennzeichnet, dass*** ein Innengewinde im Inneren des inneren Hohlraums des äußeren Pfeilers (4) ausgebildet ist.

4. Zahnersatzprothese, eine Dentalimplantatanordnung nach irgendeinem der Patentansprüche 1 bis 2 umfassend und mindestens eine Krone, die dazu geeignet ist, über die Prothesenverbindung (10) mit der genannten Anordnung zusammengefügt zu werden.

5. Dentalimplantationssatz, eine Dentalimplantatanordnung nach irgendeinem der Patentansprüche 1 bis 2 umfassend und mindestens vier Knochenschrauben (9) zum Justieren und Befestigen der Dentalimplantatanordnung auf einem Ober- oder Unterkieferknochen (1),

6. Satz nach Patentanspruch 5, **dadurch gekennzeichnet, dass** er außerdem einen Extraktor (13) umfasst,
• der die Form einer Schraube hat, deren Kopf (14) ein Greiforgan und/oder Koppelorgan für ein Ein-/Ausschraubwerkzeug umfasst,
• der ein Außengewinde umfasst, das mit dem Innengewinde zusammenwirken kann, das im inneren Hohlraum (4c) des äußeren Pfeilers (4) ausgebildet ist, und
• dessen distales Ende keinerlei Mittel aufweist, das das Zusammensetzen des Extraktors mit der Verankerungswurzel erlaubte.

## Claims

1. A dental implant assembly comprising :
1) an endosseous dental implant comprising at least one anchoring foot (3) suitable for installation in a jawbone (1) of a patient in an endosseous manner and anti-rotation means;
2) a stabilization device (5) in the form of a substantially rigid platform (6) comprising:
• at least two slender flexible lateral anchoring extensions (7), on both sides of the central platform (6), so as to be able to be placed astride the jawbone (1), plated on both side thereof, each extension comprising at least one hole (8) for positioning at least one fixing screw (9);
• a prosthetic connection (10), on its side opposite the jawbone (1), intended to receive a crown;
• an external abutment (4) intended to be fixed in the anchoring foot (3), on its side resting on the jawbone (1), which external abutment (4) comprises anti-rotation means allowing, by their association with the anti-rotation means of the endosseous dental implant, to inhibit the relative movements of the external abutment (4) with respect to the anchoring foot (3) once the external abutment (4) is placed in the anchoring foot (3) and
• a transmucosal part (11) on the opposite side of the bone (1) and directly below the prosthetic connection (10),
the substantially rigid platform (6) forming a one-piece component with the external abutment (4), the prosthetic connection (10) and the transmucosal part (11),
3) a screw (12) allowing its assembly, the head of which corresponds to the prosthetic connection (10), which screw (12) passes through from end to end the external abutment (4) and the transmucosal part (11), and the distal extremity of which is threaded,
4) the external abutment (4) and the transmucosal part (11) hollowed out so as to allow the passage of said screw (12), and
5) The anchoring foot (3) comprising an internal cavity (3c) in which is provided a tapping which can cooperate with the complementary thread (12a) of said screw (12) to allow assembly of the dental implant assembly by trans-screwing, **characterised in that** a tapping is provided within the internal cavity of the external abutment (4),

2. The dental implant assembly according to claim 1, **characterised in that** the anti-rotation means of the anchoring foot (3) and of the external abutment (4) comprise regular polygonal and/or conical complementary shaped part.

3. A stabilization device (5) in the form of a substantially rigid platform (6) comprising:
• at least two slender flexible lateral anchoring extensions (7), on both sides of the central platform (6), so as to be able to be placed astride the jawbone (1), plated on either side thereof, each extension comprising at least one hole (8) for positioning at least one fixing screw (9);
• a prosthetic connection (10), on its side opposite the jawbone (1), intended to receive a crown,
• an external abutment (4) intended to be fixed in the anchoring foot (3), on its face resting on the jawbone (1), which external abutment (4) comprises anti-rotation means allowing, by their association with the anti-rotation means of the endosseous dental implant, to inhibit the relative movements of the external abutment (4) with respect to the anchoring foot (3) once the external abutment (4) is placed in the anchoring foot (3) and
• a transmucosal part (11) on the opposite side of the bone (1) and directly below the prosthetic connection (10),
the substantially rigid platform (6) forming a one-piece component with the external abutment (4) and/or the prosthetic connection (10), **characterised in that** a tapping is provided within the internal cavity of the external abutment (4)

4. A dental reconstruction prosthesis comprising a dental implant assembly as defined in any one of claims 1 to 2 and at least one crown adapted to be assembled to said assembly via the prosthetic connection (10).

5. A dental implant kit comprising a dental implant assembly as defined in any one of claims 1 to 2 and at least four osteointegratable screws (9) to adjust and fix the dental implant assembly to a maxillary or mandibular jawbone (1).

6. The kit according to claim 5, **characterised in that** it further comprises an extractor (13):
• taking the form of a screw that the head (14) comprises gripping means and/or coupling means with a screwing/unscrewing tool,
• comprising an external thread which can cooperate with the tapping provided in the internal cavity (4c) of the external abutment (4) and,
• the distal extremity of which does not comprise any means for assembling the extractor with the anchoring foot.
